# EUROPEAN PATENT SPECIFICATION

(11) **EP 4 269 156 B1**
(45) Date of publication and mention of the grant of the patent: **19.03.2025**
(21) Application number: 22170891.0
(22) Date of filing: 29.04.2022
(51) Int. Cl.: B60K 35/10

(54) **ADJUSTING AND/OR CUSTOMISING A USER INTERFACE OF A VEHICLE**
EINSTELLUNG UND/ODER ANPASSUNG EINER BENUTZERSCHNITTSTELLE EINES FAHRZEUGS
RÉGLAGE ET/OU PERSONNALISATION D'UNE INTERFACE UTILISATEUR D'UN VÉHICULE

(43) Date of publication of application: 01.11.2023
(73) Proprietor: Volvo Car Corporation, 40531 Göteborg (SE)
(72) Inventor: ALSONSO, Alvaro Rodrigo, 40531 Göteborg (SE); GUTTORMSEN, Tor, 40531 Göteborg (SE); LIND, Niclas, 40531 Göteborg (SE); KONDRAKOV, Timur, 40531 Göteborg (SE)
(74) Representative: Maiwald GmbH

(56) References cited:
- DE-A1- 102015 104 344
- US-A1- 2021 237 576
- MARTELARO NIKOLAS NIKMART@STANFORD EDU ET AL: "WoZ Way Enabling Real-time Remote Interaction Prototyping & Observation in On-road Vehicles", PROCEEDINGS OF THE 2017 ACM ON CONFERENCE ON INFORMATION AND KNOWLEDGE MANAGEMENT , CIKM '17, ACM PRESS, NEW YORK, NEW YORK, USA, 25 February 2017 (2017-02-25), pages 169 - 182, XP058629839, ISBN: 978-1-4503-4918-5, DOI: 10.1145/2998181.2998293

## Description

### TECHNICAL FIELD

The present invention relates to a computer-implemented method for adjusting and/or customising a user interface of a vehicle, a system for adjusting and/or customising a user interface of the vehicle and a corresponding computer program element.

### BACKGROUND ART

In the prior art, user interface systems, e.g. graphical user interface systems, are known for displays in vehicles, which, for example, provide a driver with information about the vehicle and/or the state of the vehicle, these user interface systems being created for a particular application and/or for a particular vehicle. Thereby, the user interface systems are individually tailored to the respective application with the respective functions, so that a reuse of certain functions, which are also used in other user interface systems, is generally not possible, so that an additional effort arises in the development of different user interface systems. Furthermore, adjustments and/or modifications of a function of a user interface system are also only possible with the revision of the entire user interface system, just as updating a function of a user interface system of a vehicle may only be performed as an overall update of the user interface system. Moreover, a user interface system may negatively affect the driving safety of a vehicle and/or trigger failures in the function of the vehicle. In addition, responding to user experience in terms of adjusting and/or customizing a feature is also only possible by updating the entire user interface systems.

In view of this, it is found that a further need exists to provide an improved method for adjusting and/or customising a user interface of a vehicle.

The document US 2021/237576 A1 discloses a computer-implemented method for adjusting and/or customising a user interface of a vehicle.

### SUMMARY

In the view of the above, it is an object of the present invention to provide an improved method for adjusting and/or customising a user interface of a vehicle.

These and other objects, which become apparent upon reading the following description, are solved by the subject matter of the independent claims. The dependent claims refer to preferred embodiments of the invention.

The subject-matter of claim 1 relates to, a computer-implemented method for adjusting and/or customising a user interface of a vehicle is provided, comprising:
providing, by the vehicle, user interface data of the vehicle to a separate computing unit, comprising at least information about the visualization parameters of at least one user interface;
providing, by the computing unit, user interface control data for the at least one user interface based on the provided user interface data;
transmitting the user interface control data to the vehicle; and
adjusting and/or customising, by the vehicle, the at least one user interface based on the user interface control data in real time.

In other words, the computer-implemented method may be a prototyping platform that supports complex, rapid ideation and/or implementation of user interfaces in terms of human-centric design for a road-legal test fleet. In this context, vehicle functions may be read and written from vehicle signals in real time to meet the specific requirements of user interfaces, e.g., different prototypes of a user interface. Thereby, a prototype of a user interface for driving a vehicle, testing a vehicle and/or for presentation purposes for meetings may be created. However, the present disclosure is not limited to such prototyping platform.

The prototyping platform may comprise a complete tech stack or technical package that may be modular, with each module operating independently and interchangeable to adapt to the specific needs of a prototype.

Therefore, the prototyping platform may provide a common and reusable toolset for prototyping user experience in prototypes for user interfaces, which may improve the process of creating user interfaces for vehicle regarding the needed time and resources, by having to re-implement core functionality needed for each prototype of a user interface. In other words, the prototyping platform may provide a common set of user-friendly tools, both in terms of hardware and software implementation, to may reduce the effort required to explore new technologies and ideas that may be tested in a vehicle, to be able to reduce development costs and improve the driver experience of a vehicle.

In an Implementation, the computer-implemented method may comprises: providing, by the vehicle, vehicle data, which may comprise information about vehicle parameters and providing, by the computing unit, user interface control data for the at least one user interface, which may be further based on the provided vehicle data.

The vehicle data may be provided, for example, by a control unit of the vehicle, with the user interface accessing and/or displaying the vehicle data.

The control data for the user interface may be provided separately to the vehicle, for example, by a system.

In an Implementation, the user interface control data may comprises information about a selection of vehicle parameters for displaying by the at least one user interface.

The vehicle parameters displayed may vary depending on the application, vehicle type, user interface type, prototype of a user interface, etc.

In an Implementation, the vehicle data may comprises a vehicle speed of the vehicle, a vehicle gear level of the vehicle, a vehicle fuel range of the vehicle, a GPS location of the vehicle and/or further vehicle parameters. However, other data, e.g., weather data, may also be used/displayed.

Additional signals or data used and/or generated in a vehicle may also be displayed.

In an implementation, the vehicle data may be provided by the vehicle, e.g. by vehicle bus systems, preferably by a Flexray bus system, Controller Area Network bus system, CAN, Local Interconnect Network bus system, LIN, and/or automotive Ethernet bus system.

In addition, the vehicle data of various vehicle buses used in a vehicle may be provided.

In an implementation, the user interface may be configured to process web technology, in particular HTML data, CSS data and/or JavaScript data.

In this context, the user interface may comprise one or more elements that use web technologies for enabling fast iteration, deployment and reuse. In other words, making a new user interface, e.g. a prototype user interface, for a vehicle may become as simple as making a website.

Thereby, the user interface or prototype user interfaces of vehicles for driving, testing, or presenting may be in the state of being displayed as a web page as in the world wide web or documents and data in a web browser or internet browser in general.

In an implementation request data, e.g. a request of a driver, may be provided, whereby the user interface control data may then be further based on the request data.

The request data, which may be a vehicle parameter and/or user interface control data may be distinct from a driver's requirement for the vehicle.

In an implementation, the user interface may be an augmented reality user interface of the vehicle, a head-up display interface of the vehicle and/or a cockpit display interface of the vehicle.

In other words, this prototyping platform may provide flexibility to use existing vehicle features, integrate new technologies, and perform user testing in road environments of a vehicle. In addition, user interface prototypes developed with this platform may also be used in AR/VR environments or as showcase content during design reviews.

In an implementation, the vehicle may be provided by means of a vehicle software model.

In an implementation, the method may be performed as virtual reality model based on simulated vehicle data.

In an implementation, real-time may be defined in a timeframe of 10 milliseconds [ms] to 1000 [ms], preferably between 50 [ms] and 300 [ms] and most preferably about 100 [ms].

The subject-matter of claim 12 relates to a system for adjusting and/or customising a user interface of a vehicle comprising:
a first providing unit of the vehicle configured to provide user interface data of the vehicle to a separate computing unit, comprising at least information about the visualization parameters of at least one user interface;
a second providing unit of a computing unit configured to provide user interface control data for the at least one user interface based on the provided user interface data;
a transmitting unit configured to transmit the user interface control data to the vehicle; and
an adjusting and/or customising unit of the vehicle configured to adjust and/or customise the at least one user interface based on the user interface control data in real time.

In an implementation, the system may comprise:
a gateway unit;
a message broker unit;
a custom logic unit;
a remote control unit; and/or
a human machine interface (HMI) unit.

The gateway unit may be an interface to read and/or write vehicle buses.

The message broker unit may be a central hub to pass along messages of the system, in particular the control module, on request, for example, as pub/sub architecture. Therefore, the message broker unit decouples the units of the system, in particular, the control module.

The custom logic unit may be a middleware to enable stream signal processing. In computer science, middleware refers to application-neutral programs that mediate between applications in such a way that the complexity of these applications and their infrastructure are hidden.

The remote control unit may be an interface for subscribing and publishing both vehicle data and user interface data.

The HMI unit may be user-facing elements that affords communication and interaction, e.g. output/input for the driver of the vehicle.

The subject-matter of claim 14 relates to a vehicle and a computing unit configured to perform the herein disclosed method.

A further aspect of the present discourse relates to a computer program element with instructions, which, when executed on a computing device of a computing environment, is configured to carry out the steps of the disclosed method in the disclosed system.

### BRIEF DESCRIPTION OF DRAWINGS

In the following, the disclosure is described exemplarily with reference to the enclosed figures, in which:
- **Figure 1**: is a schematic diagram of an example of a process of the disclosed method;
- **Figure 2**: is a schematic illustration of an example of a vehicle with the disclosed system;
- **Figure 3**: is a schematic illustration of an example architecture of the disclosed method and system;
- **Figure 4**: is a schematic illustration of a first example of a user interface of a vehicle with the disclosed system and disclosed method;
- **Figure 5**: is a schematic illustration of a second example of a user interface of a vehicle with the disclosed system and disclosed method;
- **Figure 6**: is a schematic illustration of a third example of a user interface of a vehicle with the disclosed system and disclosed method; and
- **Figure 7**: is a schematic illustration of a fourth example of a user interface of a vehicle with the disclosed system and disclosed method.

Notably, the figures are merely schematic representations and serve only to illustrate examples of the present disclosure. Identical or equivalent elements are in principle provided with the same reference signs.

### DETAILED DESCRIPTION

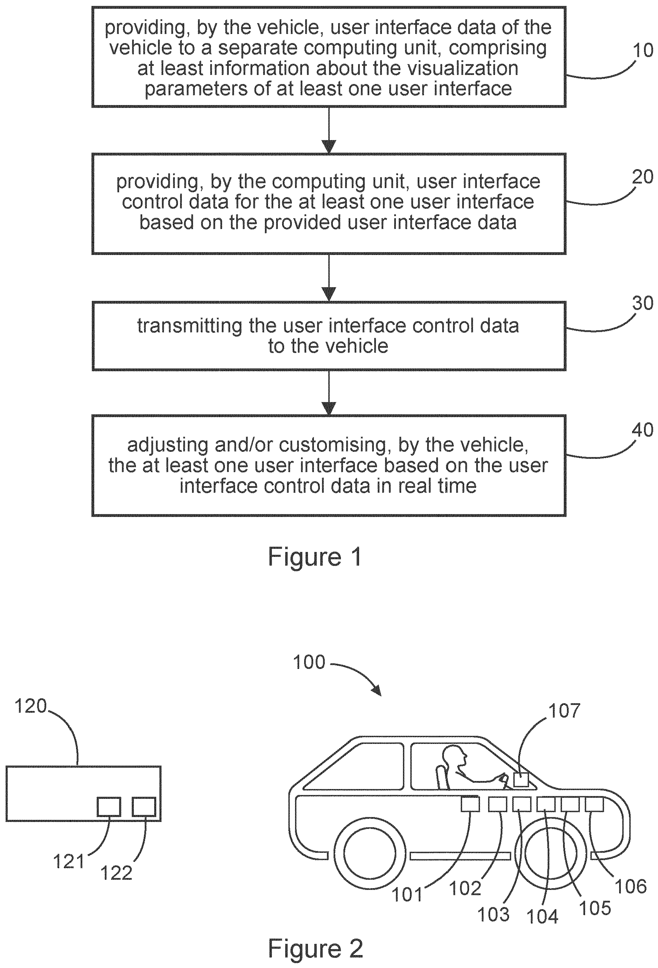

Figure 1 shows a schematic diagram of a process of the disclosed method, whereby the method comprises the steps of providing, by the vehicle, user interface data 10 of the vehicle to a separate computing unit, comprising at least information about the visualization parameters of at least one user interface. Further, a providing, by the computing unit, user interface control data 20 for the at least one user interface based on the provided user interface data. Further, a transmitting the user interface control data 30 to the vehicle. Further, an adjusting and/or a customising, by the vehicle, the at least one user interface 40 based on the user interface control data in real time.

Figure 2 shows a schematic illustration of an example of a system for adjusting and/or customising a user interface of a vehicle 100 comprising different units.

A first providing unit 101 of the vehicle configured to provide user interface data of the vehicle to a separate computing unit 120, comprising at least information about the visualization parameters of at least one user interface, e.g., a cockpit user interface of the vehicle 100. The user interface data of the vehicle may be provided to the computing unit 120 by any wireless communication method, e.g. any wireless communication technology, like a mobile communication, a Bluetooth communication, etc. In a further use case, the user interface data of the vehicle 100 may be provided to the computing unit 120 by any wire based communication standard, for example, a smart grid communication for electric vehicles during charging the electric vehicle or by means of a wired control device.

A second providing unit 121 of the computing unit 120 configured to provide user interface control data for the at least one user interface based on the provided user interface data.

A transmitting unit 122 configured to transmit the user interface control data to the vehicle 100. In addition, here, the above-mentioned communication methods may be applied/used.

An adjusting and/or customising unit 102 of the vehicle 100 configured to adjust and/or customise the at least one user interface based on the user interface control data in real time.

Further, a gateway unit 103, a message broker unit 104, a custom logic unit 105, a remote control unit 106 and a HMI unit 107 are provided in the shown example. Whereby, the HMI unit 107 is configured to display the user interface.

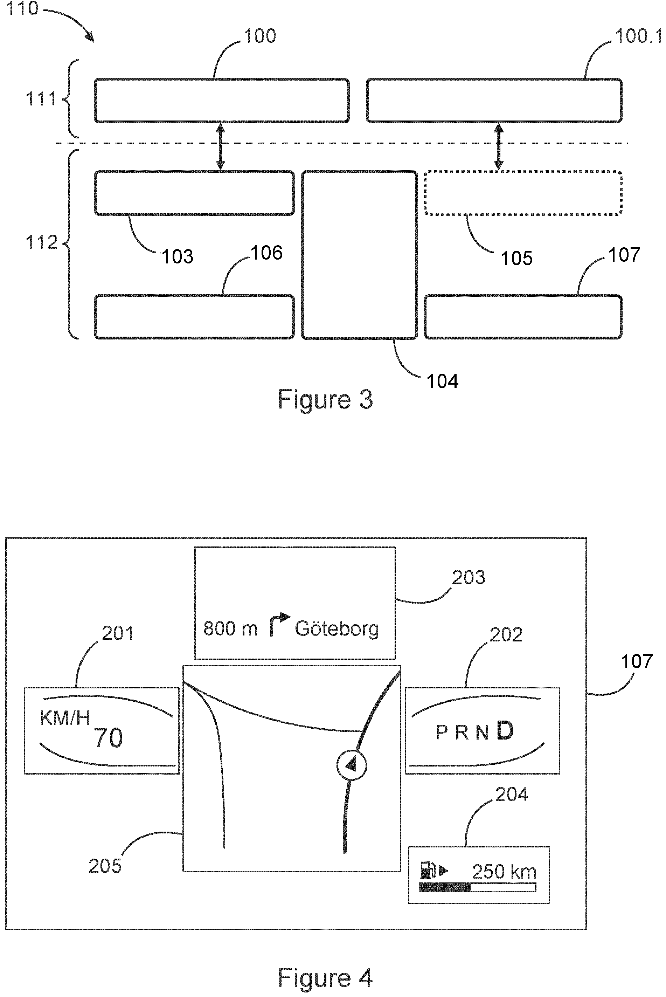

Figure 3 shows a schematic illustration of an example architecture of a method and a system 110, comprising a vehicle 100, a (prototype) database and/or a software (prototype) tool 110.1 of the system 110, a gateway unit 103, a message broker unit 104, a custom logic unit 105, a remote control unit 106 and a HMI unit 107. Whereby the (prototype) database and/or software (prototype) tool 110.1 may comprise additional devices that may be included in the user interface setup and provide, for example, a configuration of buttons and/or new buttons for a steering wheel of a vehicle. Furthermore, the (prototype) database and/or software (prototype) tool 110.1 may simulate an environment for augmented reality and/or virtual reality.

The vehicle 100 and the database 110.1 aggregated as a first stage 111 and the gateway unit 103, the message broker unit 104, the custom logic unit 105, the remote control unit 106 and the HMI unit 107 aggregated as a second stage 112. Whereby the first stage 111 and the second stage 112 are configured to communicate in a bidirectional way with each other. Moreover, the first stage 111 and/or the second stage 112 may be further configured to communication with further units/entities, e.g. server systems. Further, the first stage 111 provides data to the second stage 112 and the second stage 112 process the provided data.

In other words, data is received by the vehicle 100, whereby, the custom logic unit 105 receives a list of signals of the vehicle 100 requested by the remote control unit 106 and the HMI unit 107. The gateway unit 103 reads the signals from the vehicle busses, e.g. Flexray, CAN, LIN and/or automotive Ethernet, in real time. Whereby, the gateway unit 103 decodes the requested signals of the vehicle to human readable values and passes them to the custom logic unit 105. The custom logic unit 105 allows combining, process or simply passing through the incoming data, as needed. Further, the custom logic unit 105 publishes the data to the message broker unit 104 as requested. The HMI unit 107 displays the received data, for example, vehicle speed, gear, fuel range and/or GPS of the vehicle 100.

Further, data is received by the database 110.1, whereby the database 110.1 publish the data to the message broker unit 104. The custom logic unit 105 combines and/or process the data of the database 110.1, as needed. Further, the custom logic unit 105 publishes the data to the message broker unit 104. The HMI unit 107 displays the received data for example turn-by-turn indications and/or steering wheel button inputs.

Further, data is received by the remote control unit 106, whereby the remote control unit 106 publishes the data to the message broker unit 104. The custom logic unit 105 combines and/or processes the data of the remote control unit 106, as needed. Further, the custom logic unit 105 publishes the data to the message broker unit 104. The HMI unit 107 displays the received data, for example, notifications and/or user interface context changes.

Further, data is send to the vehicle 100, whereby received data being sent via the remote control unit 106 and/or database 110.1 from the custom logic unit 105 via the message broker unit 104 to the vehicle 100.

For example, a set of steering wheel buttons may be send to the vehicle, which should be pressed to activate a vehicle function. The request is received by the custom logic unit 105. The custom logic unit 105 translates the request to a vehicle readable format: a set of vehicle signals that will activate the vehicle function. This set of signals are injected into the vehicle's busses by the gateway unit 103.

Figure 4 shows a schematic illustration of a first example of a user interface on a HMI unit 107 of a vehicle. The user interface comprise at least a first field 201, a second field 202, third field 203, fourth field 204 and a fifth field 205.

Further, in the first field 201, the user interface shows a first field view of a speed of the vehicle comprising the actual speed and the unit of the speed.

Further, in the second field 202, the user interface shows a first field view of a used gear of a transmission of the vehicle, comprising the possible gears of the transmission and a highlighting of the used gear.

Further, in the third field 203, the user interface shows a first field view of navigation instructions for reaching a desired destination that comprises a distance for the next change of direction, a direction for the change of direction, and a location that will be reached next.

Further, in the fourth field 204, the user interface shows a remaining range of the vehicle, for example, based on the remaining fuel and/or charge of a battery of the vehicle.

Further, in the fifth field 205, the user interface shows a map of the location of the vehicle with an indication of a driving direction of the vehicle.

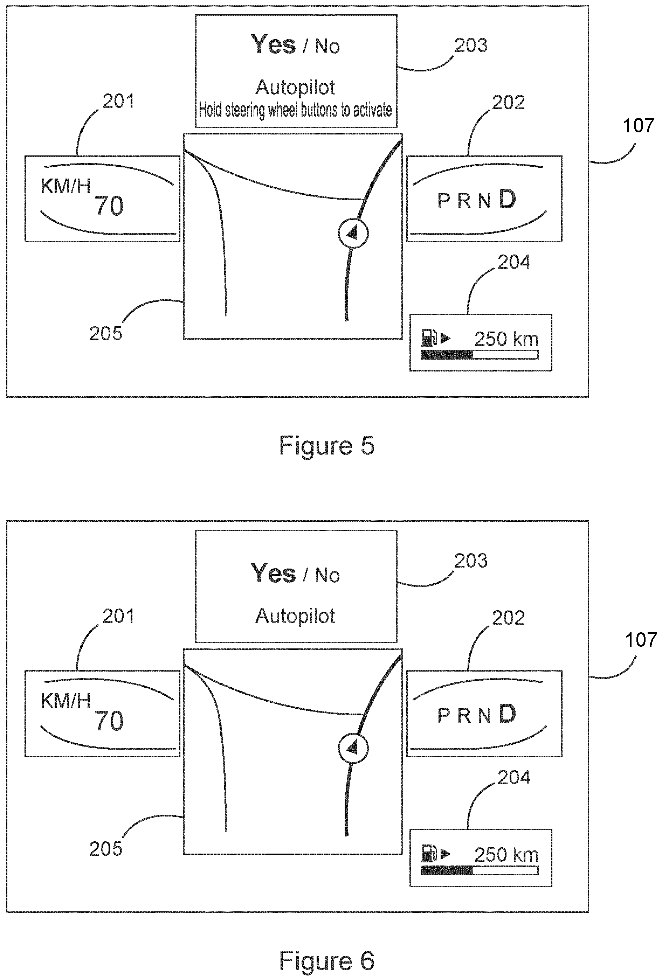

Figure 5 shows a schematic illustration of a second example of a user interface on a HMI unit 107 similar to figure 4. Whereby, here, in the third field 203, the user interface shows a second field view of autopilot information for the usage of the vehicle. Moreover, the steering wheel buttons are configured or reconfigured to activate an autopilot mode of the vehicle. It is further displayed in the third field 203 that a driver may activate the autopilot by holding the steering wheel buttons, i.e. the HMI unit 107 displays a notification on the availability of a specific vehicle function, here an autopilot function of the vehicle.

Figure 6 shows a schematic illustration of a third example of a user interface on a HMI unit 107 similar to figure 4. Whereby, here, the in the third field 203, the user interface shows an autopilot information, here that the autopilot mode of the vehicle is actually used.

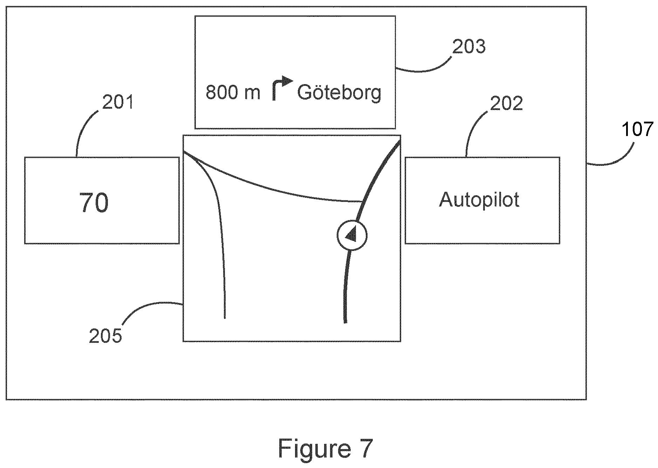

Figure 7 shows a schematic illustration of a fourth example of a user interface on a HMI unit 107 similar to figure 4. Whereby, in the first field 201, the user interface shows a second field view of a speed of the vehicle comprising the speed. As well as, in the second field 202 that the autopilot mode is activated.

In contrast to figure 4, the user interface in figure 7 does not comprise a fourth field 204.

### LIST OF REFERENCE SIGNS

- 10: providing, by the vehicle, user interface data
- 20: providing, by the computing unit, user interface control data
- 30: transmitting the user interface control data
- 40: adjusting and/or customising, by the vehicle, the at least one user interface
- 100: vehicle
- 101: first providing unit
- 121: second providing unit
- 122: transmitting unit
- 102: adjusting and/or customising unit
- 103: gateway unit
- 104: message broker unit
- 105: custom logic unit
- 106: remote control unit
- 107: HMI unit
- 110: system
- 110.1: database
- 111: first stage
- 112: second stage
- 201: first field
- 202: second field
- 203: third field
- 204: fourth field
- 205: fifth field

## Claims

1. A computer-implemented method for adjusting and/or customising a user interface of a vehicle comprising:
- providing, by the vehicle, user interface data (10) of the vehicle to a separate computing unit, comprising at least information about the visualization parameters of at least one user interface;
- providing, by the computing unit, user interface control data (20) for the at least one user interface based on the provided user interface data;
- transmitting the user interface control data (30) to the vehicle; and
- adjusting and/or customising, by the vehicle, the at least one user interface (40) based on the user interface control data in real time.

2. Method according to claim 1, further comprising:
providing, by the vehicle, vehicle data comprising information about vehicle parameters and providing, by the computing unit, user interface control data for the at least one user interface further based on the provided vehicle data.

3. Method according to claim 2, the user interface control data comprise information about a selection of vehicle parameters for displaying by the at least one user interface.

4. Method according to claim 2 or claim 3, the vehicle data comprises a vehicle speed of the vehicle, a vehicle gear level of the vehicle, a vehicle fuel range of the vehicle and/or a GPS location of the vehicle.

5. Method according to one of the claims 2 to 4, the vehicle data is provided by vehicle buses, preferably by a Flexray bus system, Controller Area Network bus system, CAN, Local Interconnect Network bus system, LIN, and/or automotive Ethernet bus system.

6. Method according to any one of the preceding claims, the user interface is configured to process web technology, in particular HTML data, CSS data and/or JavaScript data.

7. Method according to any one of the preceding claims, further comprising:
providing a request data, e.g. of a driver, and providing user interface control data further based on the request data.

8. Method according to any one of the preceding claims, the user interface is an augmented reality user interface of the vehicle, a head-up display interface of the vehicle and/or a cockpit display interface of the vehicle.

9. Method according to any one of the preceding claims, the vehicle is provided by means of a vehicle software model.

10. Method according to any one of the preceding claims, the method is performed as virtual reality model based on simulated vehicle data.

11. Method according to any one of the preceding claims, real-time is defined in a timeframe of 10 milliseconds [ms] to 1000 [ms], preferably between 50 [ms] and 300 [ms] and most preferably about 100 [ms].

12. A system for adjusting and/or customising a user interface of a vehicle (100) comprising:
- a first providing unit (101) of the vehicle configured to provide user interface data of the vehicle to a separate computing unit, comprising at least information about the visualization parameters of at least one user interface;
- a second providing unit (121) of a computing unit configured to provide user interface control data for the at least one user interface based on the provided user interface data;
- a transmitting unit (122) configured to transmit the user interface control data to the vehicle; and
- an adjusting and/or customising unit (102) of the vehicle configured to adjust and/or customise the at least one user interface based on the user interface control data in real time.

13. System according to claim 12 comprising:
a gateway unit (103);
a message broker unit (104);
a custom logic unit (105);
a remote control unit (106); and
a HMI unit (107).

14. A vehicle and a computing unit configured to perform a method according to any one of claims 1 to 11.

15. Computer program element with instructions, which, when executed on a computing device of a computing environment, is configured to carry out the steps of the method according to any one of the claims 1 to 11 in a system according to claim 12 or claim 13.

## Patentansprüche

1. Ein computerimplementiertes Verfahren zur Anpassung und/oder Individualisierung einer Benutzeroberfläche eines Fahrzeugs, umfassend:
- Bereitstellen von Benutzeroberflächendaten (10) des Fahrzeugs durch das Fahrzeug an eine separate Recheneinheit, wobei die Daten mindestens Informationen über die Visualisierungsparameter von mindestens einer Benutzeroberfläche enthalten;
- Bereitstellen von Steuerungsdaten (20) für die mindestens eine Benutzeroberfläche durch die Recheneinheit auf Basis der bereitgestellten Benutzeroberflächendaten;
- Übertragen der Steuerungsdaten (30) an das Fahrzeug; und
- Anpassen und/oder Individualisieren der mindestens einen Benutzeroberfläche (40) durch das Fahrzeug in Echtzeit auf Grundlage der Steuerungsdaten.

2. Verfahren nach Anspruch 1, weiterhin umfassend:
- Bereitstellen von Fahrzeugdaten durch das Fahrzeug, wobei die Fahrzeugdaten Informationen über Fahrzeugparameter enthalten, und
- Bereitstellen von Steuerungsdaten für die mindestens eine Benutzeroberfläche durch die Recheneinheit, zusätzlich basierend auf den bereitgestellten Fahrzeugdaten.

3. Verfahren nach Anspruch 2, wobei die Steuerungsdaten Informationen über eine Auswahl von Fahrzeugparametern zur Anzeige durch die mindestens eine Benutzeroberfläche enthalten.

4. Verfahren nach Anspruch 2 oder Anspruch 3, wobei die Fahrzeugdaten eine Fahrzeuggeschwindigkeit, eine Gangstufe des Fahrzeugs, eine Reichweite des Fahrzeugs und/oder eine GPS-Position des Fahrzeugs umfassen.

5. Verfahren nach einem der Ansprüche 2 bis 4, wobei die Fahrzeugdaten über Fahrzeugbusse bereitgestellt werden, vorzugsweise über ein FlexRay-Bussystem, ein Controller Area Network (CAN)-Bussystem, ein Local Interconnect Network (LIN)-Bussystem und/oder ein Automotive Ethernet-Bussystem.

6. Verfahren nach einem der vorhergehenden Ansprüche, wobei die Benutzeroberfläche zur Verarbeitung von Web-Technologien eingerichtet ist, insbesondere von HTML-Daten, CSS-Daten und/oder JavaScript-Daten.

7. Verfahren nach einem der vorhergehenden Ansprüche, weiterhin umfassend:
- Bereitstellen von Anfragedaten, beispielsweise durch einen Fahrer, und
- Bereitstellen der Steuerungsdaten zusätzlich basierend auf den Anfragedaten.

8. Verfahren nach einem der vorhergehenden Ansprüche, wobei die Benutzeroberfläche eine Augmented-Reality-Benutzeroberfläche des Fahrzeugs, eine Head-up-Display-Benutzeroberfläche und/oder eine Cockpit-Display-Benutzeroberfläche des Fahrzeugs ist.

9. Verfahren nach einem der vorhergehenden Ansprüche, wobei das Fahrzeug mittels eines Fahrzeugsoftwaremodells bereitgestellt wird.

10. Verfahren nach einem der vorhergehenden Ansprüche, wobei das Verfahren als Virtual-Reality-Modell basierend auf simulierten Fahrzeugdaten durchgeführt wird.

11. Verfahren nach einem der vorhergehenden Ansprüche, wobei Echtzeit in einem Zeitraum von 10 Millisekunden [ms] bis 1000 [ms] definiert ist, vorzugsweise zwischen 50 [ms] und 300 [ms] und besonders bevorzugt bei etwa 100 [ms].

12. System zur Anpassung und/oder Individualisierung einer Benutzeroberfläche eines Fahrzeugs (100), umfassend:
- eine erste Bereitstellungseinheit (101) des Fahrzeugs, eingerichtet zur Bereitstellung von Benutzeroberflächendaten des Fahrzeugs an eine separate Recheneinheit, wobei die Daten mindestens Informationen über die Visualisierungsparameter von mindestens einer Benutzeroberfläche enthalten;
- eine zweite Bereitstellungseinheit (121) einer Recheneinheit, eingerichtet zur Bereitstellung von Steuerungsdaten für die mindestens eine Benutzeroberfläche basierend auf den bereitgestellten Benutzeroberflächendaten;
- eine Übertragungseinheit (122), eingerichtet zur Übertragung der Steuerungsdaten an das Fahrzeug; und
- eine Anpassungs- und/oder Individualisierungseinheit (102) des Fahrzeugs, eingerichtet zur Anpassung und/oder Individualisierung der mindestens einen Benutzeroberfläche in Echtzeit basierend auf den Steuerungsdaten.

13. System nach Anspruch 12, umfassend:
- eine Gateway-Einheit (103);
- eine Message-Broker-Einheit (104);
- eine Custom-Logic-Einheit (105);
- eine Fernsteuerungseinheit (106); und
- eine HMI-Einheit (107).

14. Ein Fahrzeug und eine Recheneinheit, eingerichtet zur Durchführung eines Verfahrens gemäß einem der Ansprüche 1 bis 11.

15. Computerprogrammelement mit Anweisungen, die, wenn sie auf einem Rechengerät einer Rechnerumgebung ausgeführt werden, dazu eingerichtet sind, die Schritte des Verfahrens gemäß einem der Ansprüche 1 bis 11 in einem System gemäß Anspruch 12 oder Anspruch 13 auszuführen.

## Revendications

1. Procédé mis en œuvre par ordinateur pour régler et/ou personnaliser une interface utilisateur d'un véhicule comprenant de :
- fournir, par le véhicule, des données d'interface utilisateur (10) du véhicule à une unité de calcul séparée, comprenant au moins des informations concernant les paramètres de visualisation d'au moins une interface utilisateur ;
- fournir, par l'unité de calcul, des données de commande d'interface utilisateur (20) pour la au moins une interface utilisateur sur la base des données d'interface utilisateur fournies ;
- transmettre les données de commande d'interface utilisateur (30) au véhicule ; et
- régler et/ou personnaliser, par le véhicule, la au moins une interface utilisateur (40) sur la base des données de commande d'interface utilisateur en temps réel.

2. Procédé selon la revendication 1, comprenant en outre de : fournir, par le véhicule, des données de véhicule comprenant des informations concernant des paramètres de véhicule et fournir, par l'unité de calcul, des données de commande d'interface utilisateur pour la au moins une interface utilisateur également sur la base des données de véhicule fournies.

3. Procédé selon la revendication 2, les données de commande d'interface utilisateur comprenant des informations concernant une sélection de paramètres de véhicule en vue d'un affichage par la au moins une interface utilisateur.

4. Procédé selon la revendication 2 ou la revendication 3, les données de véhicule comprenant une vitesse de véhicule du véhicule, un niveau de rapport de véhicule du véhicule, une autonomie en carburant de véhicule du véhicule et/ou une localisation GPS du véhicule.

5. Procédé selon l'une des revendications 2 à 4, les données de véhicule étant fournies par des bus de véhicule, de préférence par un système de bus Flexray, un système de bus de réseau local de contrôleurs, CAN, un système de bus de réseau interconnecté local, LIN, et/ou un système de bus Ethernet automobile.

6. Procédé selon l'une quelconque des revendications précédentes, l'interface utilisateur étant configurée pour traiter une technologie web, en particulier des données HTML, des données CSS et/ou des données JavaScript.

7. Procédé selon l'une quelconque des revendications précédentes, comprenant en outre de :
fournir une donnée de requête, par exemple d'un conducteur, et fournir des données de commande d'interface utilisateur également basées sur la donnée de requête.

8. Procédé selon l'une quelconque des revendications précédentes, l'interface utilisateur étant une interface utilisateur à réalité augmentée du véhicule, une interface d'affichage tête haute du véhicule et/ou une interface d'affichage de poste de pilotage du véhicule.

9. Procédé selon l'une quelconque des revendications précédentes, le véhicule étant fourni au moyen d'un modèle logiciel de véhicule.

10. Procédé selon l'une quelconques des revendications précédentes, le procédé étant mis en œuvre sous la forme d'un modèle de réalité virtuelle basé sur des données de véhicule simulées.

11. Procédé selon l'une quelconques des revendications précédentes, le temps réel étant défini dans un délai de 10 millisecondes [ms], de manière préférée entre 50 [ms] et 300 [ms], et de manière la plus préférée d'environ 100 [ms].

12. Système pour régler et/ou personnaliser une interface utilisateur d'un véhicule (100) comprenant :
- une première unité de fourniture (101) du véhicule configurée pour fournir des données d'interface utilisateur du véhicule à une unité de calcul séparée, comprenant au moins des informations concernant les paramètres de visualisation d'au moins une interface utilisateur ;
- une seconde unité de fourniture (121) d'une unité de calcul configurée pour fournir des données de commande d'interface utilisateur pour la au moins une interface utilisateur sur la base des données d'interface utilisateur fournies ;
- une unité de transmission (122) configurée pour transmettre les données de commande d'interface utilisateur au véhicule ; et
- une unité de réglage et/ou de personnalisation (102) du véhicule configurée pour régler et/ou personnaliser la au moins une interface utilisateur sur la base des données de commande d'interface utilisateur en temps réel.

13. Système selon la revendication 12 comprenant :
une unité de passerelle (103) ;
une unité de courtier en messages (104) ;
une unité logique personnalisée (105) ;
une unité de commande à distance (106) ; et
une unité HMI (107).

14. Véhicule et unité de calcul configurée pour mettre en œuvre un procédé selon l'une quelconque des revendications 1 à 11.

15. Élément de programme **d'ordinateur** avec des instructions qui, lorsqu'il est exécuté sur un dispositif informatique **d'un** environnement informatique, est configuré pour exécuter les étapes du procédé selon l'une quelconque des revendications 1 à 11 dans un système selon la revendication 12 ou la revendication 13.
